# EUROPEAN PATENT SPECIFICATION

(11) **EP 2 223 966 B1**
(45) Date of publication and mention of the grant of the patent: **16.08.2017**
(21) Application number: 09153592.2
(22) Date of filing: 25.02.2009
(51) Int. Cl.: C08L 63/00, C09J 163/00

(54) **Epoxy adhesive compositions with high mechanical strength over a wide temperature range**
Epoxy-Haftmittelzusammensetzungen mit hoher mechanischer Festigkeit über einen breiten Temperaturbereich
Compositions d'époxy adhésives dotées d'une grande résistance mécanique sur une large plage de températures

(43) Date of publication of application: 01.09.2010
(73) Proprietor: 3M Innovative Properties Company, St. Paul, MN 55144-1000 (US)
(72) Inventor: Popp, Matthias, 40667 Meerbusch (DE)
(74) Representative: Hettstedt, Stephan

(56) References cited:
- WO-A-00/22024
- US-A1- 2007 293 603
- US-A1- 2009 048 370

## Description

### Field

The following disclosure relates to epoxy-based adhesive compositions, in particular epoxy-based adhesive compositions that exhibit high mechanical strength over a wide temperature range. Such adhesives are useful in structural assembly, such as for example as repair materials in motor vehicles or aircrafts. The disclosure also relates to processes of preparing the adhesives and to applications of the adhesives.

### Background

Structural adhesives are adhesive compositions that can bond materials with a mechanical strength comparable to mechanical fasteners. They may be used to replace or augment conventional joining techniques such as welding or mechanical fasteners, such as nuts and bolts, screws and rivets etc. In particular in the transportation industries structural adhesives can present a light weight support of or even an alternative to mechanical fasteners.

Epoxy resin compositions have been long known for their good adhesive and mechanical properties and have been widely used as bonding agents. Many of these compositions contain latent curatives (for example dicyandimides, anhydrides or aromatic amines, such as for example diaminodiphenyl sulfone) and require high temperatures for curing the adhesive composition. Such adhesive systems are referred to as "one-component systems". Other epoxy adhesive formulations with more reactive curing agents can be cured at lower temperatures. Such systems are referred to as "two-component systems", because at least the majority of the epoxy resins are kept separated from the curing agents to avoid premature cross-linking. The two parts are combined upon application of the adhesive to initiate the curing reaction.

When used as structural adhesives in transportation applications, such as for example, for bonding components or parts in motor vehicles, aircrafts or watercrafts, the epoxy resins are required to maintain their good mechanical properties not only at room temperature but also at elevated temperatures and low temperatures. Preferably, the curing system is also curable at comparatively low temperatures to save coasts.

In US2007/0293603A1 a low temperature curable epoxy adhesive composition comprising an epoxy resin containing part (A) and a part (B) comprising a polyamine and a flexible polyamide is reported to have good bonding strength at room temperature and above (73F and 180F). However, when used as structural adhesives good mechanical bonding strength is required over a wider temperature range and including temperatures below freezing. For example, airplanes can be exposed to temperatures as low as -55°C. in high altitudes. Cars may also be exposed to low temperatures in extreme weather conditions in various areas of the world. Parts of an aircraft or a motor vehicle may also be exposed to elevated temperatures. Therefore, there exists a need to provide structural adhesive compositions that have good mechanical strength (in particular good bond strength) at temperatures far below 0°C and at room temperature and at elevated temperatures.

### Summary

It has now been found that certain structural adhesive formulations provide good bonding strength over a wide temperature range below and above freezing. Such adhesive formulations can be cured at temperatures as low as 80°C.

In the following there is provided a precursor composition for a curable adhesive, as defined in the claims.

There is also provided an adhesive composition as defined in the claims.

Furthermore there is provided an article comprising the adhesive composition described above.

In another aspect there is provided the use of the adhesive composition described above for bonding components of an airplane or a motor vehicle or for bonding of components to an airplane or a motor vehicle.

In yet another aspect there is provided a process for joining parts comprising combining the two parts of a precursor composition described above from an adhesive composition, applying the adhesive composition to a first substrate, placing the second substrate that is to be joined with first substrate on the adhesive composition and curing the adhesive composition.

In a further aspect there is provided a process of making an adhesive composition comprising
providing a two part precursor composition described above,
combining the two parts of the precursor composition to form an adhesive composition,
curing the adhesive composition.

### Detailed Description

The adhesive formulations described herein are two part precursor formulations which when combined provide a curable adhesive composition. The first part of the precursor composition, part (A), contains curing agents that are capable to cross-link epoxy resins and the second part of the precursor composition, part (B), contains epoxy resins that can be cured by the curing agents of part (A).

The terms "solid" or "liquid" refer to ambient conditions (20°C, 1 bar)

Particle sizes are number averages. In case of particles that are only substantially spherical the particle size is determined by adding the length of the two main (largest orthogonal) axes of the particle and dividing it by two. "Substantially spherical" means one or all main axes (x-,y- or z-axis) may deviate from the required length to form a perfect sphere by up to 50 %, preferably up to 25%.

### Epoxy resins:

Epoxy resins are polymers having one or more epoxy-functionality. Typically but not exclusively, the polymers contain repeating units derived from monomers having an epoxy-functionality but expoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2.

Epxoy resins may be aromatic, aliphatic, cycloaliphatic or mixtures thereof. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups. Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphrhylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. Instead of, or in addition to, using the aromatic epoxy resins described above also their fully or partially hydrogenated derivatives (i.e. the corresponding cycloaliphatic compounds) may be used.

Preferably the epoxy resin is liquid at room temperature but also solid epoxy resins, or resin particles may be used or may be used in dissolved form, for example in dissolved or dispersed in a solvent or another liquid resin.

Examples of commercially available epoxy resins include diglycidylether of bisphenol A (e.g. available under the trade designation EPON 828, EPON 830 or EPON 1001 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); silicone resins containing diglycidyl epoxy functionalities; flame retardant epoxy resins (e.g. DER 580, a brominated bisphenol type epoxy resin available from Dow Chemical Co.); Other epoxy resins based on bisphenols are commercially available under the trade designations EPIKOTE (Hexion Speciality Chemicals, Rosbach, Germany), D.E.N. (Dow Chemical Co, Schwalbach/Ts., Germany), or EPILOX (Leuna Epilox GmbH, Leuna, Germany).

### Toughening agents:

Toughening agents are polymers, other than the epoxy resins, capable of increasing the toughness of cured epoxy resins compared to the same composition not containing them (the difference in amount in such comparison studies is made up by the epoxy resin) and otherwise treated identically. The toughness can be measured, for example, by the floating roller peel tests of the cured compositions as described in the example section provided herein.

The precursor compositions described herein contain two or more different core-shell polymers as toughening agents. It is believed that a combination of core-shell polymers increases the mechanical properties of the cured adhesives at low temperatures in particular at a temperature range of from about 0°C to about - 60°C and more particular at - 55°C, in particular their mechanical strength, as for example expressed a floating roller peel strength and/or overlap shear strength.

Core-shell polymers have a structure containing an internal part, referred to as core and an exterior part referred to as shell. Core and shell may be made of different polymers.

The core of the core-shell polymer may comprise or consist of a polymer or copolymer of a diene, which means the polymer or copolymer comprises repeating units derived from an olefin having two unsaturations. Examples of such olefins include but are not limited to, butadiene and isobutadiene. The core of the core-shell polymer may also comprise a polymer or copolymer comprising repeating units derived from a lower alkyl acrylate (e.g. an alkyl acrylate containing up to 20 carbon atoms). Example of such alkyl acrylates include but are not limited to, n-butyl-, ethyl-, isobutyl- or 2-ethylhexylacrylate. The core of the core-shell polymers may also comprise silicone resins or copolymers thereof. The core of the core-shell polymers may also comprise copolymers of one or more of the afore-mentioned polymers styrene or a styrene-derivative. Examples of such copolymers include, but are not limited to butadiene-styrene copolymers.

The precursor formulations contain, a first core-shell polymer having a core comprising a silicone polymer or copolymer and a second core-shell polymer having a core comprising a diene polymer or copolymer, such as for example but not limited to a butadiene polymer or copolymer or a butadiene-styrene copolymer.

The core of the core-shell polymer is typically elastomeric. It typically has a low glass transition temperature (Tg) (e.g. a Tg of less than about -30°C, or preferably less than about -50°C).

The shell of the core-shell polymer may contain the polymer of the core and one or more further copolymers. Typical copolymer include polymers containing repeating units derivable from unsaturated olefins (for example but not limited to monounsaturated olefins such as for example ethylenes, styrenes and the like), olefinic esters (for example but not limited to vinyl acetates), olefinic acids (for example but not limited to acrylates, methacrylates) or olefinic halogens (for example but not limited to vinyl chloride).

The shell may also not contain the polymers of the core but contains a polymer or copolymer comprising repeating units derivable from unsaturated olefins (for example but not limited to monounsaturated olefins such as for example ethylenes, styrenes and the like), olefinic esters (for example but not limited to vinyl acetates), olefinic acids (for example but not limited to acrylates, methacrylates) or olefinic halogens (for example but not limited to vinyl chloride). The core-shell polymers may or may not have reactive groups which can react with the epoxy resins or curing agents. The reactive groups may include, for example, epoxy groups, such as glycidyl ether groups, which may be introduced into the shell by using glycidyl methacrylate as monomer. In an embodiment of the invention, the core-shell polymer does not contain reactive groups that can react with the epoxy-resin or the curing agents comprised in the formulation, such as epoxy groups and/or amine groups.

Core-shell polymers. can be prepared for example by polymerizing monomers until a certain particle size has been generated. The polymerization is then altered for example by changing the monomer feed such that a shell is polymerized around the particles. Alternatively, the shell can be grafted onto the core or introduced by cross-linking reactions. Examples of methods for making core-shell polymers can be found, for instance, in US Patent numbers 5,186,993 to Hallden-Alberton and Wills and 4,315,085 to Ozari and Barabas, or European Patent application No 1,632,533 to Katsumi and Masakuni.

The core-shell polymers may be solid. They may be particulate materials. The core-shell polymers may have an average particle size (number average) of from about 20 nm to about 4,000 nm or from about 50 nm to about 500 nm. The first and second core-shell polymer may have the same or different particle size ranges. The particle sizes are determined by light diffraction.

The core shell polymers may have several glass transition temperatures (core and shell material may be chemically different). The compositions provided herein preferably contain at least one core-shell polymer having at least one glass transition temperature (Tg) of less than about -30°C, or less than about -50°C and even more preferably both the first and second core-shell polymer have at least one Tg of less than about - 50°C or even less than about -70°C.

In some embodiments the core-shell polymers at least one of the core-shell polymers contains repeating units derivable from butadiene, butadiene and styrene or butadiene, styrene and methacrylate. In some embodiments the precursor compositions contain one. In other embodiments the precursor compositions contain a core-shell polymer comprising repeating units derivable from butadiene and a core-shell polymer comprising a silicone polymer or copolymer.

Core shell polymers are commercially available, for example under the trade designation GENIOPERL (silicone-based core-shell polymers from Wacker Chemie, Munich, Germany), ALBIDUR (silicone-based core-shell polymers from Nanoresins, Geesthacht, Germany, PARALOID EXL (methacrylate-butadiene-styrene core-shell polymers from Rohm and Haas, Philadelphia, PA, USA), or KANE ACE MX (from Kaneka, Brussels, Belgium). Most of the commercially available core-shell rubber products are dispersed in some quantity of epoxy resins, the epoxy equivalent weights are indicated by the suppliers. This introduced amount of epoxy resin has to be considered when making up the precursor composition and when adjusting the epoxy : hardener (curing agent) ratio.

In addition to the combination of core-shell polymers, the composition may contain further toughening agents. Such toughening agents include liquid rubbers containing repeating units derived from butadiene or isobutadiene. The liquid rubber may be homo or copolymers, for example acrylate-copolymers. A particular example includes liquid butadiene acrylanitrile rubbers. Such liquid rubbers may or may not contain reactive end groups, such as for example amine-terminated rubber (ATBN) or carboxylate-terminated rubber (CTBN) or liquid rubbers containing free epoxy- or methacyrlate end-groups. Rubber means the polymers are elastomeric. The addition of a liquid butadiene rubber is believed to improve the mechanical strength of the cured adhesives at elevated temperatures, in particular at temperatures of 90°C, 120°C or even 135°C. Liquid butadiene rubbers are commercially available, for example under the trade designation HYPRO from Nanoresins AG. Geesthacht, Germany.

### Curing Agent System:

Curing agents suitable in the present invention are compounds which are capable of cross-linking (curing) the epoxy resin. Suitable curing agents according to the present invention are primary or secondary amines. The curing agent system comprises two amine curing agents, a first amine curing agent and a second amine curing agent being chemically different from the first one.

The first amine curing agent is an aliphatic, linear, primary or secondary amine. The first amine curing agent may have the general structure: 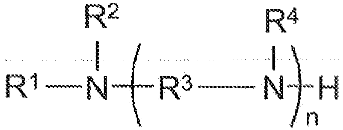 wherein
the residues R¹, R², and R⁴, independently from each other, may represent hydrogen or a hydrocarbon (such as an alkyl) or an alkoxy or a polyoxyalkyl residue containing about 1 to 15 carbon atoms. R³ represents a hydrocarbon, an alkylether or a polyether alkyl residue, preferably containing about 1 to 15 carbon atoms. More preferably R³ is a polyetheralkyl residue. Preferably, the residues R¹, R², and R⁴ are chosen such that the amine contains at least one or two primary amine groups;
n represents 1, 2, 3, 4, 5, 6, 7, 8, 9 or an integer from 1 to 10.

Examples for suitable curing agents wherein R³ is an alkyl include ethylene diamine, diethylene diamine, triethylene tetraamine, propylene diamine, tetraethylene pentaamine, hexaethylene heptaamine, hexamethylene diamine.

Preferably, the first curing agent is a polyether amine having one or tow or more primary amine moieties. The polyether amine may have 1, 2, 3, 4, 5 or 6 or from 1 to 12, or from 1 to 6 catenary ether (oxygen) atoms. Suitable polyether amines include those that can be derived from polypropylene oxide or polyethylene oxide. Suitable polyether amines are commercially available under the trade designation JEFFAMINE from Huntsman Chemicals, or TTD (4,7,10-trioxatridecane∼1,13-diamine) commercially available, for example, from BASF. Ludwigshafen Germany.

The second curing agent is a cycloaliphatic amine. The cycloaliphatic amines as used herein mean that the amine contains one or more than one cycloaliphatic residues. The cycloaliphatic amines are preferably primary amines and contain at least one primary amine group More preferably the cycloaliphatic residues contains one or more primary amine groups (e.g. -NH₂ group). Typical examples of cycloaliphatic amines include primary amines containing one or two cyclohexyl, cycloheptyl, or cyclopentyl residues or combinations thereof. The cycloaliphatic residue is typically in α-, or β-position to the amine groups (α-position means directly bonded to the amine. β-position means the position adjacent to the α-position). Particular examples of a cycloaliphatic amine curing agents include methylene dicyclohexylamines, methyl or dimethyl methylene dicyclohexylamines, isophorone amines or diamines. Suitable cycloaliphatic amine curing agents are commercially available under the trade designation ANCAMINE 2264, ANCAMINE 2280, ANCAMINE 2286 from Airproduct and Chemical Inc, Allentown, PA, USA or BAXXODUR EC331 from BASF, Ludwigshafen, Germany.

The combination of first and second amine curing agents as described above is believed to improve the mechanical strength, as for example expressed as floating roller peel strength and/or overlap shear strength, of the cured adhesive compositions at temperature ranges from about 0°C to about -55°C, or in particular at -55°C. The presence of the cycloaliphatic amine increase the mechanical strength of the cured compositions at elevated temperatures, such as for example at 120°C or even 135°C. The first and second amine curing agents described above may typically be used in a amount of from about 3: 2 to about 2 : 3 by equivalent weight (i.e. by their amine content).

### Filler:

Filler include, but are not limited to, talc, coal tar, carbon black, textile fibers, glass fibers, aramid pulp, boron fibers, carbon fibers, sheet silicates or clays (such as, for example, mica, bentonite, wollastonite, kaolin), phosphates, silica, inorganic or organic microspheres or beads or combination thereof. The mechanical strength of the cured compositions can be improved at room temperature, if the filler is a particle and not a fiber. In particular the filler particle is selected from amorphous silica, metal particles or powders, aluminium hydrates or glass spheres. The particles may be preferably spherical or substantially spherical particles. The filler particles may have a particle size of from about 0.5 to about 500 µm, or from about 1 to about 50 µm. Preferably, the majority of the filler particles has an average particle size of from about 0.8 to about 100 µm or from about 5 to about 50µm. Filler particles include silica particles, in particular amorphous (non-hollow) silica particles, hollow silica particles (hollow glass microspheres), metal particles or aluminium hydrate particles. It has been found that the silica particles as described above may further improve the mechanical strength of the cured composition at elevated temperatures, in particular at a temperature of 135°C. Preferred filler particles include fused silica. In some embodiments the compositions contain amorphous silica particles such as, for example, fused silica and hollow glass microspheres. The presence of amorphous silica particles is believed to improve the mechanical strength of the cured adhesive composition at elevated temperatures, for example at a temperature range from about 120° to about 135°C.

Fused silica is available, for example, under the trade designation MINSIL from Minco Inc., Midway, USA. Hollow glass microspheres are available under the trade designation MICROBUBBLES from 3M Company, St. Paul, MN, USA.

The precursor compositions contain the above-mentioned ingredients in such amounts that upon curing the desired mechanical strength will be achieved. By using the above-mentioned ingredients cured adhesives having one or more or all of the following properties can be prepared:
a) cured adhesives having a floating roller peel strength on aluminum substrates of at least 80 N/25mm at -55°C when using a 150 µm thick bond line (as measured according to DIN EN 2243-2 (2005);
b) cured adhesives having a floating roller peel strength on aluminum substrates of at least 135 N/25mm at 23°C when using a 150 µm thick bond line (as measured according to DIN EN 2243-2 (2005);
c) cured adhesives having a floating roller peel strength on aluminum substrates of at least 50 N/25mm at 90°C when using a 150 µm thick bond line (as measured according to DIN EN 2243-2 (2005);
d) cured adhesives having a floating roller peel strength on aluminum substrates of at least 20 N/25mm at 135°C when using a 150 µm thick bond line (as measured according to DIN EN 2243-2 (2005);
e) cured adhesives having properities a) and b) or a), b) and c);
f) cured adhesives having a floating roller peel strength on aluminum substrates of at least 80 N/25mm at -55°C, 23°C and 90°C;
g) cured adhesives having a floating roller peel strength on aluminum substrates of at least 80 N/25mm at -55°C, 23°C, 90°C and of at least 20 N/25mm, preferably at least 60N/25mm at 135°C when using a 150 µm thick bond line (as measured according to DIN EN 2243-2 (2005).

The adhesives can be cured by exposure to 80°C for two hours.

Typically, the adhesive compositions are prepared from precursor composition containing in the part (B) from 40 to 80 % wt of epoxy resins, from 10 to 40% wt. core-shell agents, from 5 to 30 % fillers wherein the total amount of ingredients in part (B) gives 100%. Typically, the part (A) of the precursor contains from 60 to 95 % curing agents, and from 2 to 10% filler with the total amounts of ingredients being 100%.

The amount of amine curing agents is typically chosen as described above.

The compositions may further contain liquid polymer comprising repeating units derived from butadiene (liquid butadiene rubbers) in amounts of 5 to 40% wt in either part (B) or part (A) or in both. If the liquid butadiene rubber is reactive, meaning it has end groups that can participate in the curing reaction, such as for example amine-terminated butadiene rubbers they are preferably present in the (A) part of the composition together with the curing agents.

The compositions my further contain other ingredients in minor amounts, typically up to 20% wt or up to 10% wt in part (A) or up to 15 or up to 10% wt in part (B) of ingredients other than the types of ingredients described above.

For preparing the curable adhesive compositions parts (A) and (B) are combined. The ratio of part (A) to part (B) to be used for making the adhesive is preferably determined by their equivalent weights based on epoxy-group content and amine content respectively. Parts (A) and (B) are mixed in an equivalent weight ratio (of amine content to epoxy content) of about 1 : 1, preferably with a (small) excess of part (A).

The compositions may further contain other ingredients, to optimize the composition or to adapt them to specific applications. The optimum amounts of these ingredients can be identified by routine experimentation.

### Other ingredients:

The compositions may further comprise adjuvants such reactive diluents, pigments, flame retardants, antioxidants, adhesion promoters, thixotropic agents, filler materials other than the filler particles mentioned above, secondary curatives, catalysts and the like.

Reactive diluents and thixotropic agents may be added to control the flow characteristics of the adhesive composition.

Thixotropic agents are added to the compositions to prevent the composition from having a water-like consistency or viscosity. Thixotropic agents typically are particulate materials having particle sizes of less than 50 nm. Preferred thixotropic agents include fumed silica. Thixotropic agents are commercially available under the trade designation Cab-O-Sil from Cabot, Schwalbach im Taunus, Germany, or Aerosil from Degussa Evonik GmbH, Frankfurt, Germany. Thixotropic agents may be present in part (A), part (B) or both. Typically, they may be present in an amount of up to 5% wt or up to 10% wt in part (A), (B) or in both.

Reactive diluents are monomeric epoxy-containing molecules. Preferably, they have a saturated or unsaturated cyclic backbone. Preferred reactive terminal ether portions include glycidyl ether. Examples of suitable diluents include the diglycidyl ether of resorcinol, diglycidyl ether of cyclohexane dimethanol, diglycidyl ether of neopentyl glycol, triglycidyl ether of trimethylolpropane. Commercially available reactive diluents are for example "Reactive Diluent 107" from Hexion or "Epodil 757" from Air Products and Chemical Inc, Allentown, PA, USA.

Pigments may include inorganic or organic pigments including ferric oxide, brick dust, carbon black, titanium oxide and the like.

Secondary curatives include imidazoles, imidazole-salts, imidazolines or aromatic tertiary amines including those having the structure of formula: 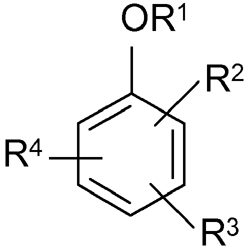 wherein
R¹ is H or alkyl, such as, e.g., methyl or ethyl, preferably methyl;
R² is CHNR⁵R⁶;
R³ and R⁴ may be, independently from each other, present or absent and when present R³ and R⁴ are CHNR⁵R⁶;
R⁵ and R⁶ are, independent from each other, alkyl, preferably CH₃ or CH₂CH₃;

An example for a secondary curative is tris-2,4,6-(dimethylaminomethyl)phenol commercially available under the trade designation ANCAMINE K54 from Air Products and Chemicals Inc.

The composition may optionally contain metal salt catalysts for accelerating the curing reaction. Suitable catalysts which are operable in the present compositions include the group I metal, group II metal or lanthanoid salts wherein the anion is selected from nitrates, iodides, thiocyanates, triflates, alkoxides, perchlorates and sulfonates with the nitrates, iodides, thiocyanates, triflates and sulfonates including their hydrates being preferred. The preferred group I metal (cation) is lithium and the preferred group II metals are calcium and magnesium with calcium being especially preferred. Accordingly, preferred catalyst salts are lanthane nitrate, lanthane triflate, lithium iodide, lithium nitrate, calcium nitrate and their corresponding hydrates. In general, a catalytic amount of salt is employed. For most applications, the catalyst will be used from about 0.05 to less than 3.0 parts by weight based on the total weight of the total composition. Typically, a weight ratio of metal salt catalyst to secondary curing agent of from about 1 : 1 to about 3 : 1 may be employed.

The adhesive composition can be applied to the desired substrate by any convenient technique. It can be applied cold or be applied warm if desired. It can be applied by extruding it or it can be applied using mechanical application methods such as a caulking gun, or by pasting it onto the substrate. Generally, the adhesive is applied to one or both substrates. The substrates are contacted such that the adhesive is located between the substrates to be bonded together. After application, the structural adhesive is cured by heating the composition to a temperature at which the curing agent initiates cure of the epoxy resin composition. Generally, this temperature may be about 60°C or about 80°C.

The adhesive of the invention can be used to bond a variety of substrates together including wood, metal, coated metal, aluminum, a variety of plastic and filled plastic substrates, fiberglass and the like. In one preferred embodiment, the adhesive is used to bond parts of an aircraft together or parts to aircrafts, i.e. the composition are used as a repair material for aircrafts. Such parts can be steel, coated steel, galvanized steel (such as electrogalvanized, hot-dip zinc coated steel or zinc/iron (galvaneal) -coated steel), aluminum, coated aluminum, plastic and filled plastic substrates.

An especially preferred structural adhesive of the invention also exhibits (when cured) mainly cohesive failure when evaluated in peel testing method as described below. It is generally desirable to have structural adhesives fail in a cohesive mode wherein the adhesive splits and portions of the adhesive remain adhered to each of the bonded surfaces. A bond that fails cohesively is referred to as being "robust". A failure mode wherein an adhesive splits and portions of the adhesive do not remain adhered to each of the surface of the substrate are referred to as "adhesive failure mode".

The following examples are provided to illustrate the invention but are not intended to limit the scope thereof. All parts and percentages are by weight unless otherwise indicated.

### Materials employed:

EPIKOTE 828 (Hexion Speciality Chemicals GmbH, Rosbach, Germany): epoxy resin based on diglycidylether of bisphenol-A).
PARALOID EXL 2600 (Rohm and Haas Company, Philadelphia, PA/USA): methacrylate/butadiene/styrene polymer with core/shell architecture (white powder not dispersed in epoxy resin).
TTD (BASF, Ludwigshafen, Germany): 4,7,10-Trioxa-1,13-tridecane-diamine.
KANE ACE MX-156 (Kaneka, Belgium): butadiene-based core/shell polymer (25%wt) dispersed in epoxy resin (diglycidylether of bisphenol A).
KANE ACE MX-257 (Kaneka, Belgium): butadiene based core/shell polymer (37%wt) dispersed in epoxy resin (diglycidylether of bisphenol A).
CAB-O-SIL TS 720 (Cabot GmbH, Hanau, Germany), hydrophobic fumed silica - treated with polydimethyl-siloxane polymer.
AEROSIL 200 (Evonik Industries, Frankfurt, Germany), hydrophilic fumed silica.
AEROSIL 202 (Evonik Industries, Frankfurt, Germany), hydrophobic fumed silica.
ALBIDUR EP 2240 A (Nanoresins, Geesthacht, Germany), silicone based core-shell toughening agent (40 %wt dispersed in epoxy resin).
ANCAMINE 2264 (Airproducts and Chemicals, Allentown, PA, USA), cycloaliphatic amine curing agent.
ANCAMINE K54 (Airproducts and Chemicals, Allentown, PA, USA), tertiary amine.
APYRAL 24 (Nabaltec GmbH Schwandorf, Germany), aluminum trihydrate.
BAXXODUR EC 331 (BASF, Ludwigshafen, Germany), cycloaliphatic amine curing agent. FILLEX 7-AE1, (Osthoff-Petrasch, Norderstedt, Germany), modified wollastonite, filler.
GENIOPERLS P52 (Wacker Chemie, Munich, Germany), silicone based core-shell toughening agent.
HOP-Mix 2303-A0 (Osthoff-Petrasch, Norderstedt, Germany), glass fibers, filler.
HOP-Plastothix (Osthoff-Petrasch, Norderstedt, Germany), inorganic micro fibers, filler.
HYPRO 1300 x 21 ATBN (Nanoresins, Geesthacht, Germany), liquid nitrile butadiene rubber, toughening agent.
KAOLIN W ultrafine (Erbslöh, Krefeld, Germany) bentonite, filler.
MINSIL SF 20 (Minco Inc, Midway, USA) fused silica
NANOMER I.E30 (Nanocor, Hoffmann Estates, USA), modified bentonite, filler.
SILANE Z6040 (Dow Corning, Seneffe, Belgium), adhesion promoter.

### Test Methods:

### Particle sizes:

Particle sizes are determined by light diffraction.

### Cohesive Strength (Overlap Shear Strength):

Overlap shear strength was determined according to DIN EN 2243-1 (2005) using a tensile tester at a crosshead speed of 10 mm/min. The test-results were reported in MPa. The cohesive strength was measured on aluminium 2024 T3 clad, etched by chromic-sulfuric acid (etching for 15 min. at 70°C, bath composition: 27.5 w/w H₂SO₄ (density 1,82), 7.5 w/w Na₂Cr₂O_{7·}2 H₂O, 65.0 w/w desalinated H₂O, additives: 0.5g/l aluminum, 1.5g/l CuSO₄·5 H₂O.)
Equipment: Zwick/Roell Z050 tensile-tester with thermal chamber (Zwick GmbH & Co. KG, Ulm, Germany)
Substrate: 100 x 25 x 1,6 mm strips of Aluminium 2024 T3 clad (available from Rocholl GmbH, Aglasterhausen, Germany), etched by chromic-sulfuric acid as described above.

Preparation of Test Assembly: The adhesive is applied on one end of a test strip using a spatula followed by overlapping the ends of the treated strip with the end of the non-treated strip. The two ends were pressed against each other forming an overlap of 10 mm. Excess adhesive was then removed using a spatula. The overlapped strips were clamped at the adhesive ends using capacity binder clips. The clamped assembly was cured for 2h at 80°C in an air circulated oven at ambient humidity prior to being submitted to the overlap shear test according to DIN EN 2243-1.

### Adhesive Strength (Floating Roller Peel Strength):

Adhesive strength was measured on aluminium 2024 T3 clad, etched by chromic-sulfuric acid. The floating roller peel strength was determined according to DIN 2243-2 (2005) using a Zwick/Roell Z050 tensile-tester with thermal chamber (Zwick GmbH & Co. KG, Ulm, Germany) operating at a crosshead speed of 140 mm / min. The test results are reported in N/25mm.

250 x 25 x 1.6 mm and 300 x 25 x 0.5 mm aluminium 2024 T3 clad (available from Rocholl GmbH, Aglasterhausen, Germany) were cleaned by immersion in methylethylketone followed by FPL etching as described above. The strips were masked with a Teflon tape (PTFE Tape 3M 5490) leaving a blank area of 200 mm x 25mm in order avoid flow of the adhesive over the extended area during assembly of the strips. This guarantees a defined bondline resulting in a well defined crack during the measurement. The test adhesive is applied on the blank area of the 1.6 mm strip and on the blank area of the corresponding 0.5m mm strip using a spatula. The strips were pressed against each other and residual adhesive was removed with a spatula. The assembly was clamped on both sides using capacity binder clips over the length of the bondline.

### Preparation of Part A:

The amine curatives were heated to 80°C. Ancamine K54 was added and the mixture was stirred for further 5 minutes. The remaining ingredients were added at room temperature (23°C) while stirring for 1 minute using a high speed mixer (DAC 150 FVZ Speedmixer, Hauschild Engineering, Germany) at 3000 rpm. The ingredients were added in small amounts to make sure the temperature does not increase over 100°C.

### Preparation of Part B:

Epoxy resin and the predispersed core shell particles were mixed at 23 °C with stirring. If used, non-predispersed core-shell polymer (Paraloid EXL 2600) was added in small portions with stirring for 15 minutes. After an additional stirring for 30 minutes, the mixture was heated to 80°C and held for 90 minutes. The solution was cooled down to room temperature. The remaining ingredients were subsequently added and homogenized with a high speed mixer (a DAC 150 FVZ Speedmixer, Hauschild Engineering, stirring at 3000 rpm for 1 minute after each addition at 23°C).

### Mixing of Part A and Part B:

Part A and Part B were mixed in a high speed mixer at 3000 rpm for 30 seconds. The compositions were then cured at 80 °C for 2 hours in an air-circulated oven at ambient humidity.

Examples 1 to 7, 9, 10 and 15 are not according to the invention. Examples 8, 11, 13, 14 and 16 are according to the invention.

### Experiments 1 to 5

The floating roller peel strength of compositions containing various toughening agents was measured at 55°C. The cured compositions were obtained by combining the A part of table 1 with the different B parts of table 2 (B1-B5). B1 is a composition containing a core-shell toughening agent based on methacrylate-butadiene-styrene polymers. B2 is a composition comprising a silicone-based core-shell toughener B3 contains a combination of the tougheners used in B1 and B2. B4 comprises a combination of a core-shell toughener with a toughening agent based on a liquid butadiene-nitrile rubber. B5 is a precursor composition comprising a combination of two core-shell polymers. Final adhesive were prepared by combining the B parts with the A parts. A and B parts were combined such that the equivalent weight ratio of A : B was 1.03 : 1.0.

**Table 1: Composition of the A-part**

| Ingredients | % by weight |
|---|---|
| TTD | 78.32 |
| Ancamine K54 | 13.50 |
| Soudan Rouge 380 | 0.08 |
| Aerosil 200 | 8.10 |
| Total | 100.00 |
| Equivalent weight | 67.80 |

**Table 2: composition of the B part.**

| Ingredient in % by weight | B 1 | B 2 | B 3 | B 4 | B 5 |
|---|---|---|---|---|---|
| Epikote 828 | 71.21 | 46.53 | 62.38 | 72.10 | 48.76 |
| Paraloid EXL2600 | 16.45 | | 7.78 | 7.78 | 7.78 |
| Albidur EP 2240 | | 41.13 | 17.50 | | |
| Kane Ace MX-156 | | | | | 31.12 |
| Hycar 1300x21 ATBN | | | | 7.78 | |
| Silane Z6040 | 0.59 | 0.59 | 0.59 | 0.59 | 0.59 |
| Carb-O-sil TS720 | 1.75 | 1.75 | 1.75 | 1.75 | 1.75 |
| Nanocor I.E.30 | 10.0 | 10.0 | 10.0 | 10.0 | 10.0 |
| Total | 100.0 | 100.0 | 100.0 | 100.0 | 100.0 |
| Equivalent weight | 265.19 | 260.21 | 257.10 | 261.93 | 257.33 |

**Table 3: Results of floating roller peel tests performed at -55°C.**

| | Ex 1 (A + B1) | Ex 2 (A + B2) | Ex 3 (A + B3) | Ex 4 (A + B4) | Ex 5 (A + B5) |
|---|---|---|---|---|---|
| Average | 59.2 | 73.8 | 94.7 | 53.7 | 105.0 |
| Standard deviation | 17.1 | 2.4 | 17.1 | 22.5 | 13.4 |
| Failure mode | adhesive | cohesive | cohesive | cohesive | cohesive |

The results of floating roller peel tests obtained with the cured samples indicate an improved mechanical strength for combinations of core-shell polymers (Ex 3, Ex 5) compared to the use of single core-shell polymers (Ex 1, Ex 2) or of a combination of a single core-shell polymer with another toughening agent (liquid butadiene rubber, Ex 4) at -55°C.

### Experiments 6 to 11

The floating roller peel strength at room temperature of compositions containing a combination of core shell toughening agents with different filler materials was examined. Adhesives were prepared by combining the A-part with the B-part as described above. All adhesive compositions tested were made up of the A-part composed as shown in table 4. The composition of the B-parts is shown in table 5. The results of the floating roller peel tests are shown in table 6.

**Table 4: the composition of the A-part**

| Ingredients | % by weight |
|---|---|
| TTD | 43.62 |
| Ancamine 2264 | 44.31 |
| Ancamine K54 | 7.52 |
| Soudan Rouge 380 | 0.05 |
| Aerosil 200 | 4.50 |
| Total | 100.00 |
| Equivalent weight | 60.90 |

**Table 5: composition of the B-part with various filler materials**

| Ingredient In % by weight | B3 | B6 | B7 | B8 | B9 | B10 |
|---|---|---|---|---|---|---|
| Epikote 828 | 62.38 | 62.38 | 62.38 | 62.38 | 62.38 | 62.38 |
| Paraloid EXL 2600 | 7.78 | 7.78 | 7.78 | 7.78 | 7.78 | 7.78 |
| Albidur EP 2240 | 17.50 | 17.50 | 17.50 | 17.50 | 17.50 | 17.50 |
| Silane Z6040 | 0.59 | 0.59 | 0.59 | 0.59 | 0.59 | 0.59 |
| Cab-O-Sil TS720 | 1.75 | 1.75 | 1.75 | 1.75 | 1.75 | 1.75 |
| Nanocor I.E.30 | 10.0 | | | | | |
| Kaolin W ultrafein | | 10.0 | | | | |
| Minsil SF20 | | | 10.0 | | | |
| Fillex 7-AE1 | | | | 10.0 | | |
| HOP-Plastothix | | | | | 10.0 | |
| Apyral 24 | | | | | | 10.0 |
| Total | 100.0 | 100.0 | 100.0 | 100.0 | 100.0 | 100.0 |
| Equivalent weight | 257.1 | 257.1 | 257.1 | 257.1 | 257.1 | 257.1 |

**Table 6: Results of floating roller peel tests performed at 23°C.**

| | Ex 6 (A+ B3) | Ex 7 (A + B6) | Ex 8 (A+ B7) | Ex 9 (A + B8) | Ex 10 (A + B9) | Ex 11 (A + B10) |
|---|---|---|---|---|---|---|
| Average | 91.4 | 102.0 | 160.6 | 123.3 | 132.5 | 154.0 |
| Standard deviation | 0.3 | 6.6 | 16.7 | 21.5 | 9.2 | 8.4 |
| Failure mode | adhesive | adhesive | cohesive | mixed | mixed | cohesive |

The results represented in table 6 indicate that the mechanical strength at room temperature of an adhesive composition containing a combination of core-shell polymers can be increased when using filler particles rather than fibers or sheet-like materials such as clays or sheet silicates.

### Experiment 12

Compositions of example 8 (Ex 8, fused silica filler) and example 11 (Ex 11, aluminium hydrate filler) were measured for their overlap shear strength at high temperature (135°C). The results shown in table 7 and 8 indicate that both filler materials are comparable at room and elevated temperature but that better mechanical strength at high temperatures (135°) can be obtained with a silica filler than with an aluminium hydrate filler.

**Table 7: Results of overlap shear tests performed with the composition of example 8 at 23°C, 90°C and 135°C.**

| Temperature | 23°C | 90°C | 135°C |
|---|---|---|---|
| Average | 42.9 | 22.4 | 15.8 |
| Standard deviation | 2.6 | 1.8 | 1.2 |
| Failure mode | cohesive | cohesive | mixed |

**Table 8: Results of overlap shear tests performed with the composition of example 11 at 23°C, 90°C and 135°C.**

| Temperature | 23°C | 90°C | 135°C |
|---|---|---|---|
| Average | 38.7 | 25.8 | 7.9 |
| Standard deviation | 1.6 | 1.6 | 1.9 |
| Failure mode | cohesive | cohesive | mixed |

### Experiment 13

The adhesive obtained by combining the precursor composition B7 of table 5 and the A part of table 4 was cured 2 hours at 80 °C. The floating roller peel strength of the samples was measured at -55°C, 23°C, 90°C and 135°C and show very good mechanical strength over the temperature range from -55°C up to 90°C and satisfying mechanical strength even at 135°C.

**Table 9: floating roller peel strength of the cured composition of experiment 13.**

| | | |
|---|---|---|
| Peel-strength at -55° [N/25mm] | Average | 111.0 |
| | Standard deviation | 8.9 |
| | Failure mode | cohesive |
| Peel-strength at 23°C [N/25mm] | Average | 160.6 |
| | Standard deviation | 16.7 |
| | Failure mode | cohesive |
| Peel-strength at 90°C [N/25mm] | Average | 179.8 |
| | Standard deviation | 34.9 |
| | Failure mode | cohesive |
| Peel-strength at 135°C [N/25mm] | Average | 28.0 |
| | Standard deviation | 5.6 |
| | Failure mode | cohesive |

### Experiments 14 to 16

The adhesive obtained by combining the precursor composition B7 of table 5 and various parts A as shown in table 10 were cured 2 hours at 80 °C. The floating roller peel strength of the samples was measured at -55°C, 23°C and 90°C. The results shown in table 11 show that a combination of curing agents improves the mechanical strength compared to the use of a single curing agent.

**Table 10: the composition of the A-parts in experiments 14 to 16**

| Ingredients | A1 [% by weight] | A2[% by weight] | A3[% by weight] |
|---|---|---|---|
| TTD | 43.62 | 30.22 | 0.0 |
| Ancamine 2264 | 44.31 | 61.44 | 94.74 |
| Ancamine K54 | 7.52 | 5.21 | 5.26 |
| Soudan Rouge 380 | 0.05 | 0.05 | 0.05 |
| Aerosil 200 | 4.50 | 4.50 | 0.0 |
| Total | 100.00 | 100.00 | 100.00 |
| Equivalent weight | 60.90 | 58.60 | 56.34 |
| Equivalent weight ratio | 1 : 1 | 1 : 2 | n.a. |
| TTD/Ancamine 2264 | | | |

**Table 11: floating roller peel strengtn of the cured composition of experiments 14 to 16.**

| | | Ex 13 (B7 + A1) | Ex 14 (B7 + A2) | Ex15 (B7 + A3) |
|---|---|---|---|---|
| Peel-strength at -55° [N/25mm] | Average | 111.0 | 99.0 | 56.1 |
| | Standard deviation | 8.9 | 11.5 | 13.5 |
| | Failure mode | cohesive | cohesive | cohesive |
| Peel-strength at 23°C [N/25mm] | Average | 160.6 | 141.0 | 90.8 |
| | Standard deviation | 16.7 | 3.1 | 3.1 |
| | Failure mode | cohesive | cohesive | cohesive |
| Peel-strength at 90°C [N/25mm] | Average | 179.8 | 103.8 | 113.7 |
| | Standard deviation | 34.9 | 24.2 | 40.9 |
| | Failure mode | cohesive | cohesive | cohesive |

### Experiment 17

The following experiments shows that the mechanical strength of at very high temperatures (135°C) of the above compositions can be further improved by adding a liquid butadiene rubber to the composition.

**Table12: the composition of the A-part (A4)**

| Ingredients | % by weight |
|---|---|
| TTD | 18.38 |
| Ancamine 2264 | 33.55 |
| Ancamine K54 | 2.80 |
| Soudan Rouge 380 | 0.03 |
| Aerosil R 202 | 5.51 |
| K37 glass bubbles | 4.60 |
| Epikote 828 | 5.51 |
| Hycar 1300X21 | 29.62 |
| Total | 100.00 |
| Equivalent weight | 102.76 |

**Table 13: the composition of the B-part (B11)**

| Ingredients | % by weight |
|---|---|
| Epikote 828 | 45.89 |
| KaneAce MX 257 | 22.22 |
| Albidur EP2240 | 16.99 |
| Silane Z6040 | 0.57 |
| Cab-O-Sil TS 720 | 4.61 |
| Minsil SF20 | 9.71 |
| Total | 100.00 |
| Equivalent weight | 266.50 |

Parts A and B were combined (3.97 g of part A and 10.0 g of part B) and cured at 80°C for 2 hours as described above. Floating roller T-peel tests and overlap shear tests were carried out on aluminum substrates at a 150µm bond line as described above. The results are shown in table 14 below.

| Peel-strength [N/25mm] | Ex 16 (A4 (3.97g) + B11(10.0 g)) | |
|---|---|---|
| at -55° [N/25mm] | Average | 136.2 |
| | Standard deviation | 12.5 |
| | Failure mode | Cohesive |
| at 23°C [N/25mm] | Average | 163.8 |
| | Standard deviation | 3.6 |
| | Failure mode | cohesive |
| at 90°C [N/25mm] | Average | 164.1 |
| | Standard deviation | 6.8 |
| | Failure mode | cohesive |
| at 135°C [N/25mm] | Average | 68.9 |
| | Standard deviation | 8.0 |
| | Failure mode | cohesive |

| Overlap shear strength | Ex 16 (A4 (3.97g) + B11 (10.0 g)) | |
|---|---|---|
| at -55° C [Mpa] | Average | 27.7 |
| | Standard deviation | 1.2 |
| | Failure mode | mixed |
| at 23°C [Mpa] | Average | 29.6 |
| | Standard deviation | 1.3 |
| | Failure mode | cohesive |
| at 90°C [Mpa] | Average | 18.1 |
| | Standard deviation | 0.5 |
| | Failure mode | cohesive |
| at 135°C [Mpa] | Average | 11.3 |
| | Standard deviation | 0.7 |
| | Failure mode | cohesive |

## Claims

1. A precursor composition for a curable adhesive, said precursor composition comprising two parts, part (A) and part (B), which are separated from each other, wherein part (B) comprises the following components;
(i) one or more epoxy resins,
wherein part (A) comprises the following components:
(ii) a combination of at least two curing agents, the first curing agent comprising a cycloaliphatic amine and the second curing agent being different from the first curing agent comprising a linear aliphatic amine,
the precursor composition further comprising either in part (A) or in part (B) or in both (A) and (B)
(iii) a first core-shell polymer toughening agent
(iv) a second core-shell polymer toughening agent
(v) a filler material selected from particles having a particle size from 0.5 to 500 µm, with the first core-shell polymer having a core comprising a silicone polymer or copolymer and the second core shell polymer having a core comprising a diene polymer or copolymer, and wherein the particle size of said provides is determined by light diffraction.

2. The precursor composition of claim 1 further comprising a liquid polymer comprising repeating units derived from butadiene.

3. The precursor composition of any one of the preceding claims wherein the epoxy resin comprises repeating units that are aromatic or cylcoaliphatic.

4. The precursor composition of any one of the preceding claims wherein the linear aliphatic amine curing agent is a polyether amine.

5. The precursor composition of any one of the preceding claims wherein the cycloaliphatic amine curing agent is a primary amine containing one or more cycloaliphatic residues selected from cyclohexyl , cycloheptyl, cyclopentyl residues or combinations thereof.

6. The precursor composition of any one of the preceding claims wherein the filler particles are amorphous silica particles.

7. An adhesive composition comprising
(i) the reaction product of an epoxy resin with a linear aliphatic amine and a cycloaliphatic amine,
(ii) a first core-shell polymer toughening agent
(iii) a second core-shell polymer toughening agent
(iv) a filler material selected from particles having a particle size from 0.5 to 500 µm, wherein the first core-shell polymer has a core comprising a silicone polymer or copolymer and the second core-shell polymer has a core comprising a diene polymer or copolymer, and wherein the particle size of said particles is determined by light diffraction.

8. The adhesive composition of claim 7 further comprising a polymer having repeating units derived from butadiene.

9. An article comprising the composition of any one of claims 7 to 8.

10. Use of composition according to any one of claims 1 to 6 in the bonding of components of an aircraft or in bonding of components to an airplane or a motor vehicle.

11. A process for joining parts comprising combining the two parts of a precursor composition according to any one of claims 1 to 6 to or from an adhesive composition according to claim 7, applying the adhesive composition to a first substrate, placing the second substrate that is to be joined with first substrate on the adhesive composition and curing the adhesive composition.

12. A process of making a curable adhesive composition comprising providing a two part precursor composition according to any one of claims 1 to 6, combining the two parts of the precursor composition to form an adhesive composition.

## Patentansprüche

1. Vorläuferzusammensetzung für einen härtbaren Klebstoff, worin die Vorläuferzusammensetzung zwei Teile, Teil (A) und Teil (B), umfasst, die voneinander getrennt sind, worin Teil (B) die folgenden Bestandteile umfasst:
(i) ein oder mehrere Epoxidharze,
worin Teil (A) die folgenden Bestandteile umfasst:
(ii) eine Kombination aus mindestens zwei Härtungsmitteln, worin das erste Härtungsmittel ein cycloaliphatisches Amin umfasst und das zweite Härtungsmittel, das vom ersten Härtungsmittel verschieden ist, ein lineares aliphatisches Amin umfasst,
worin die Vorläuferzusammensetzung ferner entweder in Teil (A) oder in Teil (B) oder sowohl in (A) als auch in (B) Folgendes umfasst:
(iii) einen ersten Kernschalenpolymerelastifikator
(iv) einen zweiten Kernschalenpolymerelastifikator
(v) ein Füllmaterial, ausgewählt aus Teilchen mit einer Teilchengröße von 0,5 bis 500 µm, worin das erste Kernschalenpolymer einen Kern aufweist, der ein Silikonpolymer oder -copolymer umfasst, und das zweite Kernschalenpolymer einen Kern aufweist, der ein Dienpolymer oder -copolymer umfasst, und worin die Teilchengröße der Teilchen mittels Lichtbeugung bestimmt wird.

2. Vorläuferzusammensetzung nach Anspruch 1, die ferner ein flüssiges Polymer umfasst, das von Butadien abgeleitete Wiederholungseinheiten umfasst.

3. Vorläuferzusammensetzung nach einem der vorstehenden Ansprüche, worin das Epoxidharz Wiederholungseinheiten umfasst, die aromatisch oder cycloaliphatisch sind.

4. Vorläuferzusammensetzung nach einem der vorstehenden Ansprüche, worin es sich bei dem linearen aliphatischen Aminhärtungsmittel um ein Polyetheramin handelt.

5. Vorläuferzusammensetzung nach einem der vorstehenden Ansprüche, worin es sich bei dem cycloaliphatischen Aminhärtungsmittel um ein primäres Amin handelt, das einen oder mehrere cycloaliphatische Reste ausgewählt aus Cyclohexyl-, Cycloheptyl-, Cyclopentylresten oder Kombinationen davon umfasst.

6. Vorläuferzusammensetzung nach einem der vorstehenden Ansprüche, worin es sich bei den Füllteilchen um amorphe Siliciumdioxidteilchen handelt.

7. Klebstoffzusammensetzung, die Folgendes umfasst
(i) das Reaktionsprodukt eines Epoxidharzes mit einem linearen aliphatischen Amin und einem cycloaliphatischen Amin,
(ii) einen ersten Kernschalenpolymerelastifikator
(iii) einen zweiten Kernschalenpolymerelastifikator
(iv) ein Füllmaterial, ausgewählt aus Teilchen mit einer Teilchengröße von 0,5 bis 500 µm, worin das erste Kernschalenpolymer einen Kern aufweist, der ein Silikonpolymer oder -copolymer umfasst, und das zweite Kernschalenpolymer einen Kern aufweist, der ein Dienpolymer oder -copolymer umfasst, und worin die Teilchengröße der Teilchen mittels Lichtbeugung bestimmt wird.

8. Klebstoffzusammensetzung nach Anspruch 7, die ferner ein Polymer umfasst, das von Butadien abgeleitete Wiederholungseinheiten aufweist.

9. Artikel, der die Zusammensetzung nach einem der Ansprüche 7 bis 8 umfasst.

10. Verwendung einer Zusammensetzung nach einem der Ansprüche 1 bis 6 beim Verbinden von Bestandteilen eines Flugzeugs oder beim Verbinden von Bestandteilen mit einem Flugzeug oder einem Kraftfahrzeug.

11. Verfahren zum Zusammenfügen von Teilen, das das Kombinieren der zwei Teile einer Vorläuferzusammensetzung nach einem der Ansprüche 1 bis 6 mit einer Klebstoffzusammensetzung nach Anspruch 7, das Aufbringen der Klebstoffzusammensetzung auf ein erstes Substrat, das Anordnen des zweiten Substrats, das mit dem ersten Substrat zusammengefügt werden soll, auf der Klebstoffzusammensetzung und das Aushärten der Klebstoffzusammensetzung umfasst.

12. Verfahren zum Herstellen einer härtbaren Klebstoffzusammensetzung, das das Bereitstellen einer zweiteiligen Vorläuferzusammensetzung nach einem der Ansprüche 1 bis 6 und das Kombinieren der zwei Teile der Vorläuferzusammensetzung zum Bilden einer Klebstoffzusammensetzung umfasst.

## Revendications

1. Composition de précurseur pour un adhésif durcissable, ladite composition de précurseur comprenant deux parties, une partie (A) et une partie (B), qui sont séparées l'une de l'autre, dans laquelle la partie (B) comprend les composants suivants :
(i) une ou plusieurs résines époxy,
dans laquelle la partie (A) comprend les composants suivants :
(ii) une combinaison d'au moins deux agents de durcissement, le premier agent de durcissement comprenant une amine cyclo-aliphatique et le deuxième agent de durcissement, qui est différent du premier agent de durcissement, comprenant une amine aliphatique linéaire,
la composition de précurseur comprenant en outre ou dans la partie (A) ou dans la partie (B) ou dans l'une et l'autre des parties (A) et (B)
(iii) un premier agent de ténacité de type polymère à noyau-enveloppe
(iv) un deuxième agent de ténacité de type polymère à noyau-enveloppe
(v) un matériau de charge choisi parmi des particules ayant une taille de particules allant de 0,5 à 500 µm, le premier polymère à noyau-enveloppe ayant un noyau comprenant un polymère ou copolymère de silicone et le deuxième polymère à noyau-enveloppe ayant un noyau comprenant un polymère ou copolymère diénique, et dans laquelle la taille de particules desdites particules est déterminée par diffraction lumineuse.

2. Composition de précurseur selon la revendication 1, comprenant en outre un polymère liquide comprenant des motifs de répétition dérivés de butadiène.

3. Composition de précurseur selon l'une quelconque des revendications précédentes, dans laquelle la résine époxy comprend des motifs de répétition qui sont aromatiques ou cyclo-aliphatiques.

4. Composition de précurseur selon l'une quelconque des revendications précédentes, dans laquelle l'agent de durcissement amine aliphatique linéaire est une amine de polyéther.

5. Composition de précurseur selon l'une quelconque des revendications précédentes, dans laquelle l'agent de durcissement amine cyclo-aliphatique est une amine primaire contenant un ou plusieurs résidus cyclo-aliphatiques choisis parmi des résidus cyclohexyle, cycloheptyle, cyclopentyle ou des combinaisons de ceux-ci.

6. Composition de précurseur selon l'une quelconque des revendications précédentes, dans laquelle les particules de charge sont des particules de silice amorphe.

7. Composition adhésive comprenant
(i) le produit de réaction d'une résine époxy avec une amine aliphatique linéaire et une amine cyclo-aliphatique,
(ii) un premier agent de ténacité de type polymère à noyau-enveloppe
(iii) un deuxième agent de ténacité de type polymère à noyau-enveloppe
(iv) un matériau de charge choisi parmi des particules ayant une taille de particules allant de 0,5 à 500 µm, dans laquelle le premier polymère à noyau-enveloppe a un noyau comprenant un polymère ou copolymère de silicone et le deuxième polymère à noyau-enveloppe a un noyau comprenant un polymère ou copolymère diénique, et dans laquelle la taille de particules desdites particules est déterminée par diffraction lumineuse.

8. Composition adhésive selon la revendication 7, comprenant en outre un polymère comportant des motifs de répétition dérivés de butadiène.

9. Article comprenant la composition selon l'une quelconque des revendications 7 à 8.

10. Utilisation d'une composition selon l'une quelconque des revendications 1 à 6, pour la liaison de composants d'un aéronef ou pour la liaison de composants à un avion ou un véhicule à moteur.

11. Procédé de raccordement de parties, comprenant la combinaison des deux parties d'une composition de précurseur selon l'une quelconque des revendications 1 à 6 à ou à partir d'une composition adhésive selon la revendication 7, l'application de la composition adhésive à un premier substrat, la mise en place du deuxième substrat qui doit être raccordé au premier substrat sur la composition adhésive et le durcissement de la composition adhésive.

12. Procédé de fabrication d'une composition adhésive durcissable, comprenant la fourniture d'une composition de précurseur en deux parties selon l'une quelconque des revendications 1 à 6, la combinaison de deux parties de la composition de précurseur pour former une composition adhésive.
